# EUROPEAN PATENT SPECIFICATION

(11) **EP 3 672 833 B1**
(45) Date of publication and mention of the grant of the patent: **06.10.2021**
(21) Application number: 18773256.5
(22) Date of filing: 23.08.2018
(51) Int. Cl.: B60N 3/00

(54) **FURNITURE COMPONENT FOR RECREATIONAL VEHICLES**
MÖBELKOMPONENTE FÜR WOHNMOBILE
ÉLÉMENT D'AMEUBLEMENT POUR VÉHICULES DE LOISIRS

(30) Priority: 24.08.2017 IT 201700095843
(43) Date of publication of application: 01.07.2020
(73) Proprietor: Tecnoform S.p.A., 40053 Valsamoggia (BO) - Frazione Crespellano (IT)
(72) Inventor: RIDJIC, Tomislav, 40053 Valsamoggia (BO) (IT)
(74) Representative: Brunacci, Marco
(86) International application number: PCT/IB2018/056382
(87) International publication number: WO 2019/038705

(56) References cited:
- JP-A- H05 345 540
- US-A1- 2017 021 931

## Description

### Technical Field

The present invention relates to a furniture component for recreational vehicles, such as caravans and motor homes.

### Background Art

In recreational vehicles, the need to install furniture components which ensure functionality, comfort and aesthetic quality is well known.

For this reason, designers and operators are seeking innovative solutions to optimize the space available in the vehicle without sacrificing aesthetic appeal and providing the user with the possibility to perform all the functions normally required in a home.

In this regard, well known is the installation inside the recreational vehicle of furniture components, such as tables, cooktops or other worktops, equipped with movable elements, such as extensions/canopies hinged to the structure of the furniture component, which can be opened and closed in rotation in order to increase the work surface of the furniture component.

This way, the furniture component offers the possibility of increasing the work surface by simply rotating the movable elements from a closed position, wherein they are lowered and substantially adherent to the body of the furniture component, to an open position, wherein the movable elements are rotated and define an extension of the work surface of the furniture component.

The known furniture components, provided with movable elements, do have a number of drawbacks.

Being movable structures and outside the body of the furniture component, the movable elements described above, such as extensions/canopies, are a strong element of aesthetic discontinuity and badly harmonize with the typically essential and minimal forms of the design of recreational vehicles. Furthermore, these same elements, due to repeated movements from the closed position to the open position, constitute weak points of the furniture component. Furthermore, the movable elements are often risk factors for the safety of the user.

The user, in fact, could accidentally bump into an element in closed position if this is protruding, or could suffer blows or other consequences due to sudden closure or sudden failure of the movable element.

Another furniture component for recreational vehicles is known from US 2017/021931 A1.

### Description of the Invention

The main aim of the present invention is to devise a furniture component for recreational vehicles with improved aesthetic quality, functionality and comfort. Another object of the present invention is to devise a furniture component for recreational vehicles which allows overcoming the aforementioned drawbacks of the prior art within the scope of a simple, rational, easy, efficient to use and cost-effective solution.

The aforementioned objects are achieved by the present furniture component for recreational vehicles having the characteristics of claim 1.

### Brief Description of the Drawings

Other characteristics and advantages of the present invention will become more evident from the description of a preferred, but not exclusive embodiment of a furniture component for recreational vehicles, illustrated by way of an indicative, but non-limiting example, in the attached drawings in which:
Figure 1 is an axonometric view of the furniture component according to the invention;
Figures 2 and 3 are axonometric views of details of the furniture component according to the invention;
Figure 4 is a sectional view of a detail of the furniture component according to the invention.

### Embodiments of the Invention

With particular reference to these figures, reference numeral 1 globally indicates a furniture component for recreational vehicles.

The furniture component 1 comprises a base structure 2 having an exposed surface 3.

In the present embodiment, the base structure 2 is substantially a parallelepiped with rectangular base, the exposed surface 3 of which coincides with the outer surface of the parallelepiped.

The furniture component 1 shown can be used for a variety of functions, e.g., as a kitchen top.

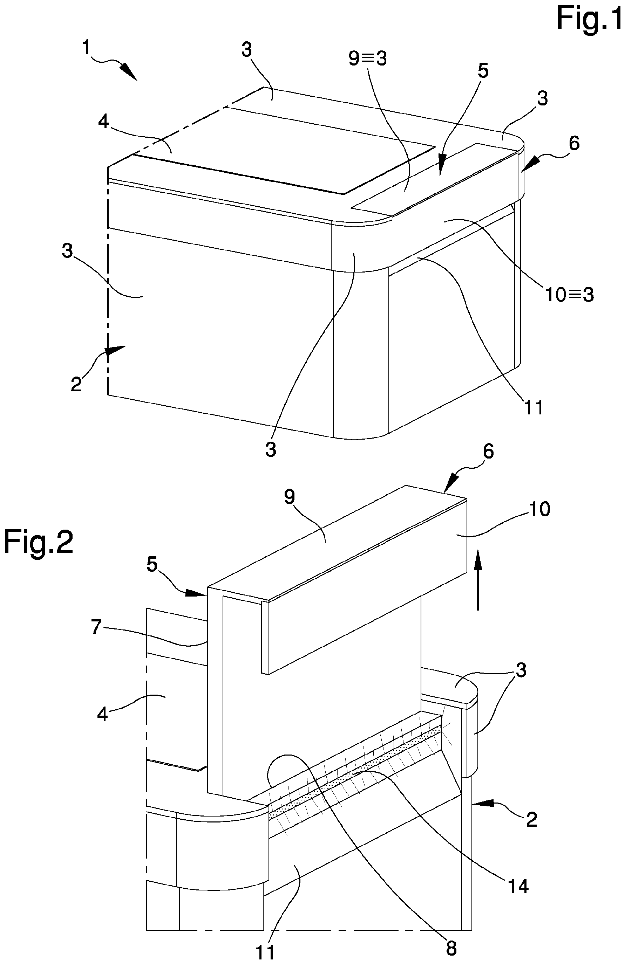

In the present embodiment, the furniture component 1 is provided with a functional surface 4, schematically shown in Figure 1, which can be associated with a cooktop or a generic worktop, or can be associated with various types of installations, e.g., electrical or hydraulic.

According to the invention, the furniture component 1 comprises a movable element 5 which moves from a closing position to an opening position.

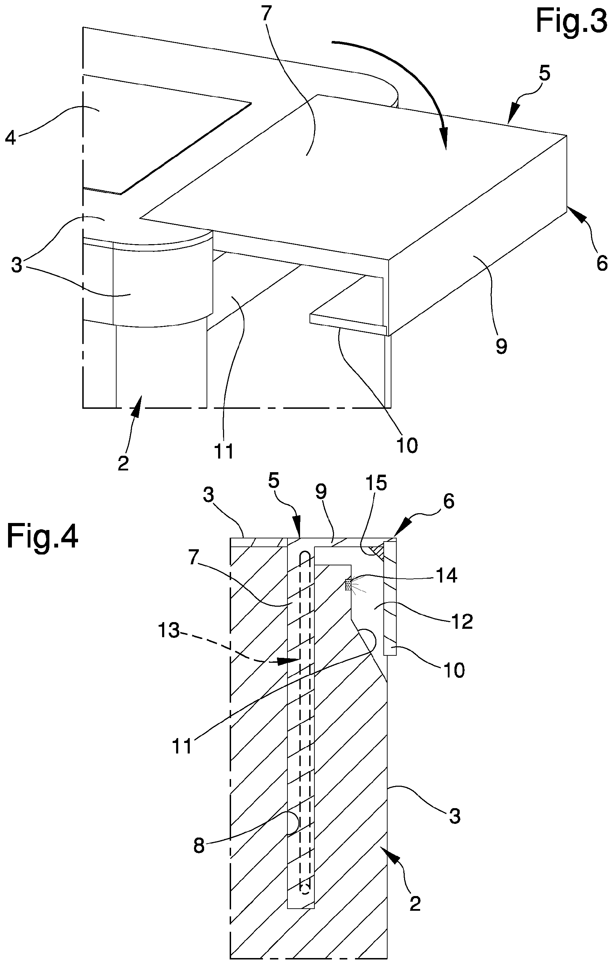

In the closing position, shown in Figures 1 and 4, the movable element 5 is at least partially inserted in the base structure 2.

In the opening position, the movable element 5 is at least partially pulled out of the base structure 2.

In the present embodiment, the opening position has two configurations, a first configuration wherein the movable element 5 is raised vertically and pulled out of the base structure 2, and a second configuration wherein the movable element 5 is rotated and placed substantially horizontally to increase the work surface of the furniture component.

According to the invention, the movable element 5 is provided with at least one head portion 6 which, in the closing position, defines at least one portion of exposed surface 3.

As shown in Figure 1, the head portion 6 is shaped in such a way as to define in itself a portion of exposed surface 3, creating a retractable effect of the movable element 5 when this is in closed position.

Usefully, the head portion 6 defines a portion of exposed surface 3 which outlines a profile continuous with the adjacent exposed surface, conveying aesthetic appeal and continuity of design to the furniture component.

In other words, the head portion 6 is shaped so as to adapt to measure to the exposed surface adjacent to the movable element 5.

Such feature, besides conveying aesthetic appeal, maximizes spaces and minimizes the risks for the user related to accidental impacts, inasmuch as there are no protruding portions.

In the present embodiment, the movable element 5 comprises a work surface 7 associated with the head portion 6.

The work surface 7, as shown in Figure 4, in the closing position, is fully inserted into the base structure 2.

In particular, in the base structure 2 a fitting seat 8 is obtained in which the work surface 7 can be housed.

The work surface 7 is positionable vertically (in the closing position) and horizontally (in the opening position, figure 3).

The head portion 6 comprises a first stretch 9 associated with the work surface 7.

With reference to the illustrations, the first stretch 9, in the closing position, defines a portion of the exposed surface 3, in particular a portion of the exposed surface 3 at the top of the furniture component 1.

Furthermore, the head portion 6 comprises a second stretch 10 associated with the first stretch 9.

With reference to the illustrations, the second stretch 10, in the closing position, defines a portion of the exposed surface 3, in particular a perimeter portion of the exposed surface 3, i.e. delimiting the edge of the base structure 2.

Usefully, the furniture component 1 comprises a reinforcing element 15 positioned between the first stretch 9 and the second stretch 10.

Such feature gives greater strength to the head portion 6.

This way, the head portion 6 is resistant to repeated stresses due to the movements necessary to move the movable element 5 from one position to another.

In the present embodiment, the second stretch 10 is substantially parallel to the work surface 7 and the first stretch 9 is substantially orthogonal to the work surface itself.

Different solutions cannot be ruled out, e.g. wherein at least one of the first stretch 9, the second stretch 10 and the work surface 7 is inclined differently from that shown.

Different solutions cannot be ruled out, e.g., wherein the head portion 6 comprises a single curved stretch, or a number of stretches greater than two. Advantageously, the base structure 2 comprises an inclined portion 11 placed inferiorly to the head portion 6 to define, in the closing position, a gripping space 12.

In this treatise, the term "inclined portion" refers to the direction of the profile of the section of the base structure 2 with respect to the vertical direction (Figure 4).

This characteristic allows a user to easily grip the head portion 6 by inserting one hand into the gripping space 12.

In the present embodiment, the inclined portion 11 is recessed with respect to the head portion 6 when the latter is in the closing position.

As illustrated in Figure 5, the inclined portion 11 is recessed towards the inside of the base structure 2.

Solutions with different inclinations or solutions in which the inclined portion 11 is protruding with respect to the head portion 6 cannot be ruled out.

In this case, the gripping space 12 would be at least partially external to the base structure 2.

Preferably, the furniture component 1 comprises guide and positioning means 13, schematically shown in the illustrations, of the movable element 5.

The guide and positioning means 13 are associated with the movable element 5 and are adapted both to slide the movable element 5 from the closing position to the opening position and to keep the same movable element 5 in a stable position when it is in the opening position.

By way of example, the guide and positioning means 13 comprise at least one guide positioned vertically inside the base structure 2 and along which the movable element 5 can slide out of the base structure 2.

The positioning of the movable element 5 in horizontal position occurs, e.g., by means of a pin associated with the movable element 5.

Alternative solutions cannot be ruled out wherein the guide and positioning means 13 are made in a different way, e.g., comprising a curved guide with end stop adapted to position the movable element 5, or comprising a thrust spring associated with retaining means which are variable between a retention configuration, wherein the spring is retained and the movable element 5 is in the closing position, and a release configuration, wherein the spring is left free to push the movable element 5 and bring it into the opening position.

Advantageously, the furniture component 1 comprises at least one lighting element 14 interposed between the inclined portion 11 and the head portion 6. This characteristic allows obtaining a luminous effect which is adapted to visually indicate the position of the movable element 5.

In particular, the lighting element 14 is facing in the gripping space 12.

Such feature allows obtaining a diffusing light effect from the gripping space 12 towards the outside, creating a pleasant aesthetic effect, particularly suitable to enhance the design of the furniture component 1.

In the present embodiment, the lighting element 14 is of the type of a led strip and is fixed to a portion of the base structure 2 above the inclined portion 11. Different lighting elements 14 cannot be ruled out, e.g., incandescent bulbs or phosphorescent or fluorescent or reflective elements.

Furthermore, solutions cannot be ruled out which provide for a different positioning of the lighting element 14, e.g., associated with the head portion 6. Furthermore, the use cannot be ruled out of several lighting elements 14, e.g., several led strips placed at different heights.

The following invention operates as follows.

The inclined portion 11 and the head portion 6, in the closing position, enable a user to grip the grip portion itself in order to pull the movable element 5 out of the base structure 2.

By reversing the movement, the same user can reinsert the movable element 5 in the base structure 2 until it is in the closing position.

The conformation of the movable element 5 is such that it can be seamlessly integrated into the external profile of the base structure 2, with the first stretch 9 and the second stretch 10 becoming an integral part of the exposed surface 3 of the structure itself.

The lighting element 14 emits light radiation in the gripping space 12 and the radiation diffused inside it comes out below the head portion 6 surrounding the portion itself and making exposed the position of the movable element 5.

It has in practice been ascertained that the described invention achieves the intended objects and, in particular, the fact is underlined that the furniture component for recreational vehicles has features which improve its appearance, functionality and comfort.

The particular conformation of the head portion ensures the retractability of the movable element in the furniture component.

This way, in addition to improved aesthetics, with the shapes of the furniture component design being enhanced, functionality and comfort are ensured.

In fact, the risk for the user's safety linked to the presence of objects coming out of the furniture component is eliminated, but the possibility of increasing the working surface remains.

This permits saving working space and increasing the comfort of the recreational vehicle in which the furniture component is installed.

The light effect obtainable from the combination of the lighting element and the gripping space permits both making the movable element exposed and creating a pleasant optical effect aimed at aesthetically enhancing the furniture component.

## Claims

1. Furniture component (1) for recreational vehicles comprising a base structure (2) having an exposed surface (3) and a movable element (5) which moves from a closing position, in which it is at least partially inserted in said base structure (2), to an opening position, in which it is at least partially pulled out of said base structure (2), and provided with at least one head portion (6) which, in said closing position, defines at least one portion of said exposed surface (3);
**characterized by** the fact that said head portion (6) is shaped in such a way as to, in said closing position, adapt to measure to said exposed surface (3) adjacent to said movable element (5), define in itself a portion of said exposed surface (3), creating a retractable effect of said movable element (5), and defines a portion of said exposed surface (3) which outlines a profile continuous with the adjacent exposed surface (3), conveying aesthetic appeal and continuity of design to the furniture component (1).

2. Furniture component (1) according to claim 1, **characterized by** the fact that said base structure (2) comprises an inclined portion (11) placed inferiorly to said head portion (6) to define in said closing position a gripping space (12).

3. Furniture component (1) according to one or more of the preceding claims, **characterized by** the fact that said inclined portion (11) is recessed with respect to said head portion (6) in said closing position.

4. Furniture component (1) according to one or more of the preceding claims, **characterized by** the fact that it comprises at least one lighting element (14) interposed between said inclined portion and said head portion.

5. Furniture component (1) according to one or more of the preceding claims, **characterized by** the fact that said lighting element (14) is facing in said gripping space (12).

6. Furniture component (1) according to one or more of the preceding claims, **characterized by** the fact that said movable element (5) comprises a work surface (7) associated with said head portion (6) and that, in said closing position, is fully inserted into said base structure (2).

7. Furniture component (1) according to one or more of the preceding claims, **characterized by** the fact that said head portion (6) comprises a first stretch (9) associated with said work surface (7) and that in said closing position defines a portion of said exposed surface (3).

8. Furniture component (1) according to one or more of the preceding claims, **characterized by** the fact that said head portion (6) comprises a second stretch (10) associated with said first stretch (9) and that, in said closing position, defines a portion of said exposed surface (3).

9. Furniture component (1) according to one or more of the preceding claims, **characterized by** the fact that said second stretch (10) is substantially parallel to said work surface (7) and said first stretch (9) is substantially orthogonal to said work surface (7).

10. Furniture component (1) according to one or more of the preceding claims, **characterized by** the fact that it comprises at least one reinforcing element (15) positioned between said first stretch (9) and said second stretch (10).

## Patentansprüche

1. Möbelkomponente (1) für Freizeitfahrzeuge, die eine Basisstruktur (2) mit einer freiliegenden Oberfläche (3) und ein bewegliches Element (5) umfasst, das sich von einer Schließstellung, in der es zumindest teilweise in die Basisstruktur (2) eingesetzt ist, in eine Öffnungsposition bewegt, in der es zumindest teilweise aus der Basisstruktur (2) herausgezogen ist, und das mit zumindest einem Kopfabschnitt (6) versehen ist, der in der Schließstellung zumindest einen Abschnitt der freiliegenden Oberfläche (3) definiert;
**dadurch gekennzeichnet, dass** der Kopfabschnitt (6) so geformt ist, dass er sich in der Schließstellung an die freiliegende Oberfläche (3) angrenzend an das bewegliche Element (5) anpasst, in sich selbst einen Abschnitt der freiliegenden Oberfläche (3) definiert, wodurch ein Einzieheffekt des beweglichen Elements (5) erzeugt wird, und einen Abschnitt der freiliegenden Oberfläche (3) definiert, der ein mit der angrenzenden freiliegenden Oberfläche (3) durchgehendes Profil umreißt, wodurch der Möbelkomponente (1) ein ästhetischer Reiz und eine Kontinuität des Designs verliehen wird.

2. Möbelkomponente (1) nach Anspruch 1, **dadurch gekennzeichnet, dass** die Basisstruktur (2) einen geneigten Abschnitt (11) aufweist, der unterhalb des Kopfabschnitts (6) angeordnet ist, um in der Schließstellung einen Greifraum (12) zu definieren.

3. Möbelkomponente (1) nach einem oder mehreren der vorhergehenden Ansprüche, **dadurch gekennzeichnet, dass** der geneigte Abschnitt (11) in Bezug auf den Kopfabschnitt (6) in der Schließstellung zurückversetzt ist.

4. Möbelkomponente (1) nach einem oder mehreren der vorhergehenden Ansprüche, **dadurch gekennzeichnet, dass** sie mindestens ein Beleuchtungselement (14) aufweist, das zwischen dem geneigten Abschnitt und dem Kopfabschnitt angeordnet ist.

5. Möbelkomponente (1) nach einem oder mehreren der vorhergehenden Ansprüche, **dadurch gekennzeichnet, dass** das Beleuchtungselement (14) in den Greifraum (12) gerichtet ist.

6. Möbelkomponente (1) nach einem oder mehreren der vorhergehenden Ansprüche, **dadurch gekennzeichnet, dass** das bewegliche Element (5) eine dem Kopfabschnitt (6) zugeordnete Arbeitsfläche (7) aufweist, die in der Schließstellung vollständig in die Grundstruktur (2) eingesetzt ist.

7. Möbelkomponente (1) nach einem oder mehreren der vorhergehenden Ansprüche, **dadurch gekennzeichnet, dass** der Kopfabschnitt (6) eine erste Erstreckung (9) aufweist, die mit der Arbeitsfläche (7) verbunden ist und die in der Schließstellung einen Teil der freiliegenden Oberfläche (3) definiert.

8. Möbelkomponente (1) nach einem oder mehreren der vorhergehenden Ansprüche, **dadurch gekennzeichnet, dass** der Kopfabschnitt (6) eine zweite, der ersten Erstreckung (9) zugeordnete Erstreckung (10) aufweist, die in der Schließstellung einen Teil der freiliegenden Oberfläche (3) definiert.

9. Möbelkomponente (1) nach einem oder mehreren der vorhergehenden Ansprüche, **dadurch gekennzeichnet, dass** die zweite Erstreckung (10) im Wesentlichen parallel zu der Arbeitsfläche (7) und die erste Erstreckung (9) im Wesentlichen orthogonal zu der Arbeitsfläche (7) verläuft.

10. Möbelkomponente (1) nach einem oder mehreren der vorhergehenden Ansprüche, **dadurch gekennzeichnet, dass** sie mindestens ein Verstärkungselement (15) aufweist, das zwischen der ersten Erstreckung (9) und der zweiten Erstreckung (10) angeordnet ist.

## Revendications

1. Élément d'ameublement (1) pour des véhicules de loisirs comprenant une structure de base (2) présentant une surface exposée (3) et un élément mobile (5) qui se déplace d'une position de fermeture, dans laquelle il est au moins partiellement inséré dans ladite structure de base (2), dans une position d'ouverture, dans laquelle il est au moins partiellement retiré de ladite structure de base (2), et doté d'au moins une portion de tête (6) qui, dans ladite position de fermeture, définit au moins une portion de ladite surface exposée (3) ;
**caractérisé en ce que** ladite portion de tête (6) est formée de manière à, dans ladite position de fermeture, s'adapter pour la mesure à ladite surface exposée (3) adjacente audit élément mobile (5), définir en elle-même une portion de ladite surface exposée (3), créant un effet rétractable dudit élément mobile (5), et définit une portion de ladite surface exposée (3) qui souligne un profil continu avec la surface exposée adjacente (3), transférant un attrait esthétique et une continuité de conception à l'élément d'ameublement (1).

2. Élément d'ameublement (1) selon la revendication 1, **caractérisé en ce que** ladite structure de base (2) comprend une portion inclinée (11) placée de manière inférieure sur ladite portion de tête (6) pour définir dans ladite position de fermeture un espace de préhension (12).

3. Élément d'ameublement (1) selon l'une ou plusieurs des revendications précédentes, **caractérisé en ce que** ladite portion inclinée (11) est évidée par rapport à ladite portion de tête (6) dans ladite position de fermeture.

4. Élément d'ameublement (1) selon l'une ou plusieurs des revendications précédentes, **caractérisé en ce qu'**il comprend au moins un élément d'éclairage (14) interposé entre ladite portion inclinée et ladite portion de tête.

5. Élément d'ameublement (1) selon l'une ou plusieurs des revendications précédentes, **caractérisé en ce que** ledit élément d'éclairage (14) est tourné dans ledit espace de préhension (12).

6. Élément d'ameublement (1) selon l'une ou plusieurs des revendications précédentes, **caractérisé en ce que** ledit élément mobile (5) comprend une surface de travail (7) associée à ladite portion de tête (6) et qui, dans ladite position de fermeture, est pleinement insérée dans ladite structure de base (2).

7. Élément d'ameublement (1) selon l'une ou plusieurs des revendications précédentes, **caractérisé en ce que** ladite portion de tête (6) comprend une première étendue (9) associée à ladite surface de travail (7) et qui dans ladite position de fermeture définit une portion de ladite surface exposée (3).

8. Élément d'ameublement (1) selon l'une ou plusieurs des revendications précédentes, **caractérisé en ce que** ladite portion de tête (6) comprend une seconde étendue (10) associée à ladite première étendue (9) et qui, dans ladite position de fermeture, définit une portion de ladite surface exposée (3).

9. Élément d'ameublement (1) selon l'une ou plusieurs des revendications précédentes, **caractérisé en ce que** ladite seconde étendue (10) est sensiblement parallèle à ladite surface de travail (7) et ladite première étendue (9) est sensiblement orthogonale à ladite surface de travail (7).

10. Élément d'ameublement (1) selon l'une ou plusieurs des revendications précédentes, **caractérisé en ce qu'**il comprend au moins un élément de renforcement (15) positionné entre ladite première étendue (9) et ladite seconde étendue (10).
